# EUROPEAN PATENT SPECIFICATION

(11) **EP 2 366 250 B1**
(45) Date of publication and mention of the grant of the patent: **02.10.2013**
(21) Application number: 09752474.8
(22) Date of filing: 08.10.2009
(51) Int. Cl.: H04N 7/167

(54) **METHOD AND APPARATUS FOR SECURE DISTRIBUTION OF AUDIOVISUAL DATA ENCAPSULATED ACCORDING TO A PLURALITY OF TRANSPORT PROTOCOLS**
VERFAHREN UND VORRICHTUNG ZUR SICHEREN VERTEILUNG VON GEMÄSS MEHREREN TRANSPORTPROTOKOLLEN EINGEKAPSELTEN AUDIOVISUELLEN DATEN
PROCÉDÉ ET APPAREIL PERMETTANT UNE DISTRIBUTION SÉCURISÉE DE DONNÉES AUDIOVISUELLES ENCAPSULÉES SELON UNE PLURALITÉ DE PROTOCOLES DE TRANSPORT

(30) Priority: 14.10.2008 US 250840
(43) Date of publication of application: 21.09.2011
(73) Proprietor: NAGRA FRANCE SAS, 75015 Paris (FR)
(72) Inventor: FOLEA, Octavian, 80337 München (DE); LESTEVEN, Didier, F-91210 Draveil (FR)
(74) Representative: Leman Consulting S.A.
(86) International application number: PCT/IB2009/054405
(87) International publication number: WO 2010/044021

(56) References cited:
- EP-A- 0 356 200
- EP-A- 0 957 606
- EP-A- 1 220 541
- EP-A1- 1 921 858
- WO-A-2007/050066
- WO-A1-2005/032135
- US-A- 5 870 474
- US-A1- 2002 172 233
- US-A1- 2006 075 135

## Description

### FIELD OF THE INVENTION

The invention generally relates to a secure distribution of audiovisual data. The invention relates more specially to a method and apparatus for secure distributing of audiovisual data encapsulated according to a plurality transport protocols to various devices connected to a network.

### BACKGROUND OF THE INVENTION

Various de vices (STBs, PCs, mobile phones and other mobile entertainment devices) are used nowadays to consume the audiovisual content transported through multiple distribution infrastructures (satellite, radio, cable and IP networks). Providing unified commercial offers for all these technological platforms represents a key element for the service providers willing to differentiate themselves from their concurrence.

The technical means to deploy such cost-effective unified services are focusing on reusing hardware/software components on client side (chipsets for audio visual decoding/de-multiplexing, smartcards for descrambling etc.) and to transport the unique audiovisual streams through various distribution infrastructure. This feature is made possible by encapsulating the audio visual streams through multiple transport protocols. The most known protocols for audiovisual data transport are UDP (User Data gram Protocol), RTP (Real Time Protocol) and RTSP (Real Time Streaming Protocol) for IP networks, as well as MPEG-2 TS (Transport Stream) for satellite, radio and cable networks.

For example, a digital TV service using satellite infrastructure for broadcasting would use MPEG-2 TS as transport protocol. The same operator wants to provide an IPTV service for receiving devices connected to an IP network. In this situation, the audiovisual streams will be encapsulated according to two transport protocols: MPEG-2 TS to guarantee the transmission till the IP head-end infrastructures, and RTP or UDP for streaming the content to the devices connected to a n IP network.

In order to protect the content transmission, most of the transport protocols contain specifications relating to security mechanisms: SRTP (Secure RTP) and ISMACryp (Internet Streaming Media Alliance) pro vides specification for content protection over RTP; DVB-CA (Common Scrambling Algorithm) specifies security mechanisms for content transport over MPEG-2 TS according to the DVB standard; IP SEC (Security) addresses the security of IP transport proto col.

The skilled man may use an y of the said security mechanisms 20 designed for a specific transport protocol to protect the content transmission.

However, u sing such a mechanism a specific transport protocol would allow the de-protection of audio visual steam only by the devices compliant to the said specific transport protocol. Regarding the example presented above, distributing securely audio visual streams to an IP-featured device would require a protection on IP level that would prevent a MPEG-2 TS featured device to access such an audiovisual stream.

This disadvantage is major: a service provider is forced to choose at the headend of the distribution infrastructure his protection system that would strongly limit the choice of hardware devices for the end-user.

In addition, once the protection system was chosen, it will be impossible to access to the clear audiovisual stream at any level of the distribution chain, to insert a mark identifying the distribution nodes, for example, or to simply modify the content of the audiovisual streams.

### SUMMARY OF THE INVENTION

In order to re solve these disadvantages, the present demand proposes a method and system for securing the transport according to a plurality of transport protocols of an audiovisual stream to a device supporting any of the said transport protocols. The same protected audiovisual stream will then be able to be de-protected by a device supporting any of the said transport protocol, and not only one specific transport protocol.

In the document EP 0 957 606 a solution described seeks to provide a data transmission controlling method and a data transmission system whereby data transmission from a data transmitter to data receivers is carried out in a more secure and a more reliable manner than before.

According to this document, there is provided a data transmission controlling method comprising the steps of: transmitting data encrypted by data transmitting means to data receiving means over a first communication channel provided for data transmission from the data transmitting means to the data receiving means; and transmitting to the data receiving means restrictive data transmission control information for causing the encrypted data from the data transmitting means to be received solely by specific data receiving means at least over a second communication channel which, having a smaller capacity of data transmission than the first communication channel, is also used for data transmission from the data receiving means to the data transmitting means.

The document EP 1921858 describes a method for encrypting an encoded scalable enhancement frame sent by an emitter to a receiver, the enhancement frame comprising a plurality of complementary streams ordered in term of quality level, each complementary stream corresponding to a combination of more than one scalability type, where a complementary stream of a lower quality level corresponds to a lower quality on each scalability type, comprising at the level of the emitter the steps of generating a key per complementary stream for encrypting the complementary stream in such a individually used, said keys being generated in such a way that only the keys of the complementary streams of quality levels lower than the quality level of a complementary stream can be obtained from the key of said complementary stream, and sending the key of a complementary stream corresponding to a quality level to the receiver, the key permitting a receiver to generate the keys of the complementary streams of the lower quality levels only.

The document US 2002/172233 describes a method for multiplexing digital data, wherein a packet of digital data is simultaneously sent from front to rear and from rear to front. Additionally, a method is describes for multiplexing digital data, wherein a packet of digital data is simultaneously sent from the beginning of the packet towards the end and from the end towards the beginning. Additionally, a method for multiplexing digital data, wherein simultaneously a packet of digital data is sent and the same packet is sent backwards.

In this situation, the proposed method will allow protection and de-protection of an audiovisual stream in dependent of the hierarchy of the transport protocols used for encapsulating the said audiovisual content.

According to these statements, this document discloses a method is provided for secure distribution of an audiovisual stream constituted by a set of transport packets encapsulated according to a plurality of transport protocols suitable to be transmitted to a user device compatible with one of the said transport protocols, the method comprising the steps of:
- generating a protected audio visual stream from the original stream, the said principal audio visual comprising a set of modified transport packets that are different from the corresponding original transport packets at modification positions;
- generating a complementary stream of any format comprising digital information suitable to allow reconstruction of the original audiovisual stream from the said principal stream,
- reconstituting the on the said receiving de vice the original audiovisual stream from the protected stream as function of the said complementary stream wherein the method is being characterized that:
- the said complementary stream comprises the said modification positions and
- the said modification position s are generated according to each transport protocol of the said transport protocols.

Another disclosure of the present invention is a system comprising:
- means to generate a protected audio visual stream from the original stream, the said protected audiovisual comprising a set of modified transport packets that are different from the corresponding original transport packets at modification positions;
- means to generate a complementary stream of any format comprising digital information suitable to allow reconstruction of the original audiovisual stream from the said protected stream,
- means to reconstitute on the said receiving de vice the original audiovisual stream from the principal stream as function of the said complementary stream wherein the system is being characterized that:
- the said complementary stream comprises the said modification positions and
- the said modification positions are generated according to each transport protocol of the said transport protocols.

### BRIEF DESCRIPTION OF THE DRAWINGS

The above aspect of the present invention will become more apparent by describing in detail exemplary embodiments thereof with reference to the attached drawing figures, wherein :
FIGS. 1A and 1B show the structured view of a protection system to securely deliver multimedia content encapsulated according to a plurality of transport protocols.
FIG. 2 shows a detailed description of a first and a second scrambling module integrated on server side into the protection system presented in FIG. 1.
FIG. 3 shows a detailed description of a descrambling module integrated on client side into the protection system presented in FIG. 1.

### DETAILED DESCRIPTION OF THE EXEMPLARY EMBODIMENTS

Hereinafter, certain exemplary embodiments of the present invention will be described in detail with reference to the accompanying drawing figures.

In the following description, the matters defined in the description such as a detailed construction and elements are nothing but the ones provided to assist in a comprehensive understanding of the invention. Thus, it is apparent that the present invention can be carried out without those defined matters. Also, well-known functions or constructions a re not described in detail since they would obscure the invention in unnecessary detail.

In addition, identical references within the accompanying drawing figures address similar technical elements, unless a different meaning is clearly described.

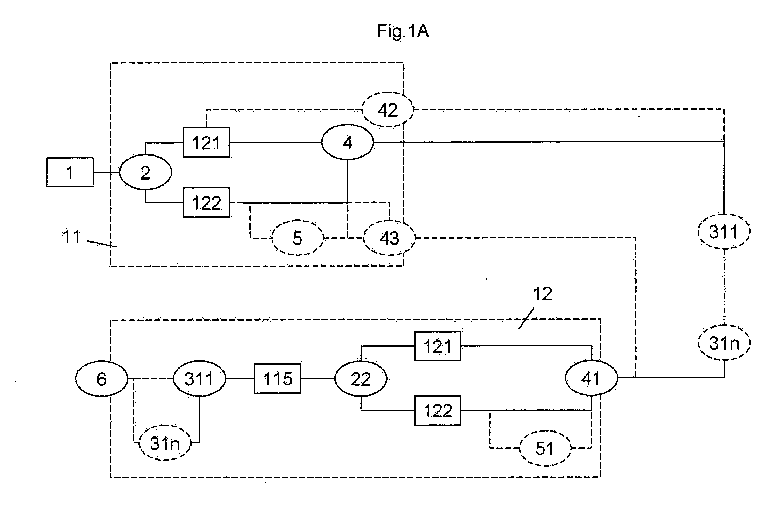

FIG.1A is a structured view of a protection system comprising: a content distribution server 11 and a receiving device 12 to playback the content distributed by the serve r 11.

The original content stream 1 is a multimedia stream containing video and audio flows, as well as rich media flows.

The audiovisual compression methods are the ones well known to the skilled man like the standard ones: MPEG-2, MPEG-4 part 2, MPEG-4 AVC/H.26 4, MPEG-4 SVC etc. or the one s largely used by industry: Windows Media Audio and Video, VP6 etc.

The original stream 1 is constituted by a set of transport packets encapsulated according to a plurality of transport protocols.

According to a preferred and non-limitative embodiment, the transport packets are encapsulated according to the following transport protocols: first the audiovisual content is packaged according to MPEG-2 TS (see ISO/IEC 13818-1), the resulting MPEG-2 TS being encapsulated according to RTP (see RFC3550) to output RTP packets.

The original content stream 1 is scrambled by a scrambling module 2 that generates as output:
- a protected stream 121 comprising a set of modified transport packets that are different from the corresponding original transport packets at modification positions, and
- a complementary stream 122 that comprises the information needed by a descrambling module 22 to recover the original stream 1.

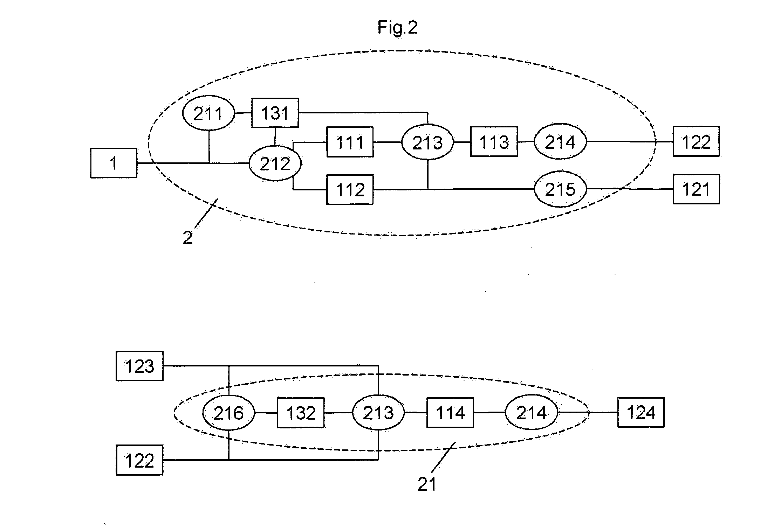

The functioning of the scrambling module 2 is detailed later in the document (FIG. 2).

The format of the complementary stream 122 can either be proprietary, either standard, for example compliant with at least one of the said transport protocols of the protected stream 121.

According to one aspect, the transmission of the complementary stream 122 is protected by the protection module 5 using various cryptographic means well known by the skilled man.

Both protected stream 121 and complementary stream 122 are transmitted by a transmission module 4 according to a proprietary or standard transport protocol.

According to one aspect, both protected stream 121 and complementary stream 122 are transmitted separately by a transmission module 42 and a transmission module 43 respectively, according to a proprietary or standard transport protocol.

According to another aspect, the protected stream 121 and the complementary stream 122 are multiplexed before being transmitted.

According to one aspect, the protected stream 121 is unpacked by an unpacking module 311 or by a plurality n unpacking modules 31 n, after the transmission from the content distribution server 11 and before the reception on the receiving device 12. If the complementary stream 122 was mixed and transmitted through he same transport session as the protected stream 121 by the transmission device 4, it will be unpacked as well as the protected stream 121. These unpacking modules are compliant to the transport protocols used to encapsulate the original stream 1, the same as the ones used to encapsulate the protected stream 121. These unpacking operations are applied to allow the transmission of the protected stream 121 (and eventually the complementary stream 122) through a variety of network infrastructures (like satellite or cable regarding MPEG-2 TS, or IP regarding RTP) as well as to be adapted for consumption on a variety of receiving devices (like set-top-boxes for MPEG-2 TS, or IP media centers for RTP).

On the client side, the receiving device 12 recovers the protected stream 121 and the complementary stream 122 through the network interface 41.

The receiving device 12 is a computer, a set-top-box, a media center, a mobile phone, a PDA, a portable media player or any other hardware device with multimedia capabilities.

The network interface 41 is an IP (Internet Protocol), cable, terrestrial, satellite or mobile network interface, depending on which kind of network the two streams are transmitted.

According to one aspect, complementary stream 122 is de-protected by a de-protection module 51 compliant with the protection module 5.

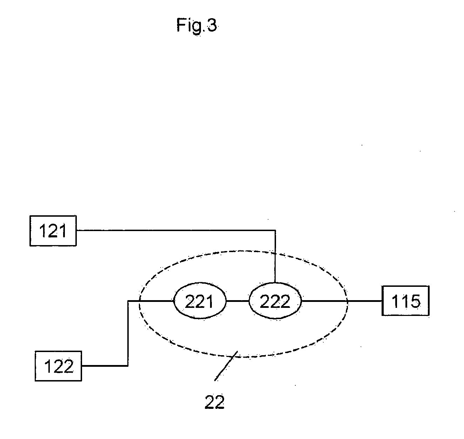

The two streams are then processed by the descrambling module 21 in order to generate the original transport packets 115 in function of the complementary stream 122. The functions of the descrambling module 22 will be described later (FIG. 3).

The original transport packets 115 are then processed by an unpacking module 311, or by a plurality n unpacking modules 31 n in order to obtain the video frames and/or the audio samples that will be decoded and rendered by the multimedia decoding interface 6.

The multimedia decoding interface 6 is a software/hardware module performing audiovisual decoding, a multimedia player or an external device with various capabilities in terms of multimedia decoding and rendering.

According to one aspect, the unpacking module 311 or the plurality n unpacking modules 31 n are software/hardware modules integrated within multimedia decoding interface 6.

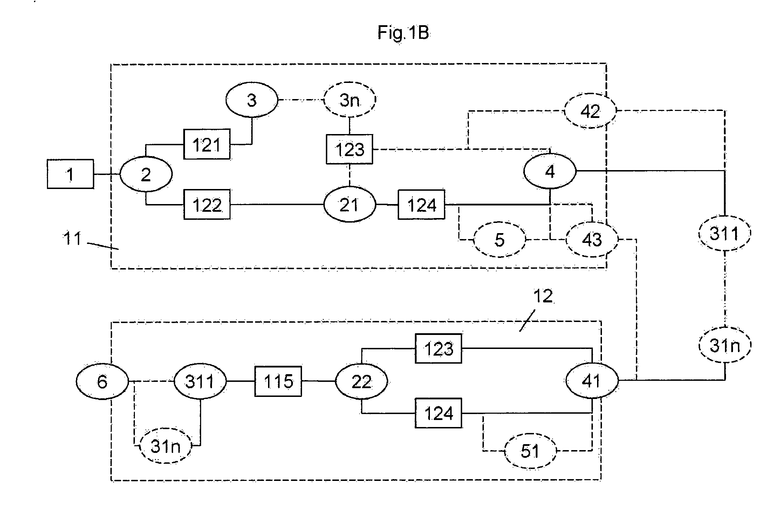

FIG.1B is a structured view of an alternative protection system. The difference from the protection system presented within the FIG. 1A is that the protected content 121 is packaged according to a transport protocol by an encapsulating module 3, or according to n transport protocols by n encapsulating modules 3n in order to determine a second protected stream 123. This second protected stream 123 is processed by a second scrambling module 21 to generate the second complementary stream 124. The second protected stream 123 and the second complementary stream 124 are then processed as the protected stream 121 and the complementary stream 122 in FIG. 1A.

The second scrambling module 21 is used in the situation when further encapsulation operations according to various transport protocol occur after the protection process. This allows a greater flexibility for the service provider, which can choose any time a new distribution infrastructure, without being oblige to re-apply the initial protection process.

FIG. 2 details the functioning of the scrambling module 2 and the second scrambling module 21.

The functioning of the scrambling module 2 comprises a set of operation steps that will be described below.

The analyze step 211 is applied on each of the said original transport packets of the original stream 1 in order to determine all the transport protocols used to encapsulate the said original transport packets. The output is a list 131 of transport protocols, where the first transport protocol in the list is the one situated at lowest-level on the transport protocol stack.

According to the preferred embodiment, the result of the analyze step 211 is a list 131 containing two transport protocols: MPEG-2 TS and RTP.

The modification step 212 is applied in order to determine a modified transport packet 112 and a complementary packet 111 corresponding to each of the said original transport packets of the original stream 1. The complementary packet 111 has any format and it comprises digital information suitable to allow reconstruction of the said original transport packets from corresponding modified transport packets 112.

The modification step 212 is applied as described below.

First, the data chosen to be modified is isolated from the original transport packet by determining the transport packet corresponding to the first transport protocol from the list 131. According to the preferred embodiment, the MPEG-2 TS packet is chosen for modification.

Secondly, the offset within the chosen transport packet and the size of the binary data to be modified are determined. The said offset and size are characterizing the modification position used by the descrambling module 22 to recover the original data and to insert it back into the modified transport packet to determine the original transport packet.

Third, the original data extracted from the said chosen transport packet by using the modification position (offset and the size) is stored within complementary packet 111. The said offset and size are stored within the complementary packet 111, too.

The type of the transport protocol (in the preferred embodiment, MPEG-2 TS), or the transport protocol position within the list 131 of transport protocol (the value 1) can be also stored within the complementary packet 111.

The complementary packet 111 comprises also the synchronization information allowing the descrambling module 22 to select the modified transport packet 112 and a complementary packet 111 in order to recover the original transport packet.

According to the preferred embodiment, the synchronization information comprises at least one of the following information related to the structure of the MPEG-2 TS packet or the PES packet: PID, stream_id, PTS, DTS, etc.

Alternative mechanisms to determine the synchronization information to be added inside the complementary packet 111 may be used. For example, the private data fields allowed by various transport protocols can be used to add a unique identifier within the modified transport packet 112 and stored within the complementary packet 111.

At the end of the modification step, the data is modified and inserted back into the original transport packet creating the modified transport packet 112. The data allowing the reconstruction of the original transport packet from the modified transport packet 112 is stored within the complementary packet 111.

According to one aspect, the data is modified by using various cryptographic techniques well-known to the skilled man. The key or the keys issued further to the use of these cryptographic techniques allowing the reconstruction of the said original transport packet are stored within the complementary packet 111.

According to another aspect, data is modified by replacing the original data with different data within the modified transport packet 112. The original data is then stored within the complementary packet 111.

According to one aspect, the set of the modified transport packets 112 allows the unpacking module 311 or the plurality n unpacking modules 31 n to generate video frames and/or the audio samples to be decoded and rendered at a degraded visual and/or audible quality by the multimedia decoding interface 6. This can be achieved by implementing within the modification step 212 a modification method as the one described for example by the document WO2005/032135.

The updating step 213 generates an updated complementary packet 113 containing the information allowing the reconstruction of the original transport packet for any transport protocol in the list 131.

The updating step 213 is applied as following: for each transport stream in the list 131, excepting the first one (already used by the modification step 212), the offset, the size, the identification information of the protocol and the synchronization information are generated as described further the modification step 212 and combined with the content of complementary packet 111 to generate the updated complementary packet 113.

According to the preferred embodiment, the updating step 213 is applied for RTP.

The packaging step 215 reassembles all the modified transport packets 112 to generate the protected stream 121 that is compliant to all the transport protocols that the original stream 1 is compliant with.

The packaging step 214 reassembles all the updated complementary packets 113 to generate the complementary stream 122 that is compliant to a proprietary transport protocol or to at least one of the transport protocols that the original stream 1 is compliant with.

The functioning of the second scrambling module 21 is similar to the one of the scrambling module 2, only the analyze step 216 being slightly different of the analyze step 211.

Further to the analyze step 216, a list 132 of transport protocols is generated to contain the difference between the set of transport protocols to which the second protected stream 123 is compliant with and the set of transport protocols already addressed within the complementary stream 122.

The difference between the second updated complementary packets 114 and the corresponding updated complementary packets 113 are related to the information regarding the transport protocols from the list 132.

The output of the second scrambling module 21 is the second complementary stream 124 that resembles all the second updated complementary packets 114, and it t is compliant to a proprietary transport protocol or to at least one of the transport protocols that second protected stream 123 is compliant with.

FIG 3 details the functioning of the descrambling module 22.

The analyze step 221 takes as input parameter complementary packets 114 or 113 of the complementary stream 122 or 124 and a fixed value identifying a chosen transport protocol. This chosen transport protocol is the one supported by the unpacking module 311 or by the one of the n unpacking modules 31 n. The identity of the chosen protocol will used to extract from the complementary packet 114 or 113 the data containing the modification position (the offset and the size), the synchronization information and the data allowing the reconstruction of an original packet using a modified transport packet from the protected stream 121 or 123. The extracted data represents the output of this step.

The reconstitution step 222 uses the output data of the analyze step 221 to select the corresponding modified transport packet from the protected stream 121 or 123 and to reconstitute the original packet 115.

According to one aspect, the reconstitution step 222 applies various decryption techniques to reconstitute the original packet 115 from the corresponding modified transport packet using a decryption key or decryption keys from the output of the analyze step 222.

According to another aspect, the reconstitution step 222 replace the data from the modified transport to reconstitute the corresponding original packet 115 using the original data from the output of the analyze step 222.

## Claims

1. A method for secure distribution of an original audiovisual stream (1) constituted by a set of transport packets encapsulated according to a plurality of transport protocols suitable to be transmitted to a receiving device (12) compatible with one of the said transport protocols, the method comprising the steps of:
- generating a protected audiovisual stream (121, 123) from **an** original stream, the said **protected** audiovisual stream comprising a set of modified transport packets that are different from the corresponding original transport packets at modification positions;
- generating a complementary stream (122, 124) of any format comprising digital information suitable to allow reconstruction of the original audiovisual stream from the said protected **audiovisual** stream,
- reconstituting the on the said receiving device the said original audiovisual stream from the said protected **audiovisual** stream as function of the said complementary stream,
- the said complementary stream comprises **the original data and** said modification positions and
- the said modification positions are generated **for** each transport protocol of the said transport protocols,
wherein the method comprises :
- an analyzing step (211) to generate a list (131) of transport protocols containing all transport protocols to which the said original stream is compliant with, **the list of transport protocols being organized such that the first transport protocol in the list is the one situated at lowest-level on the transport protocol stack;**
- a modification step (212) to generate modified transport packets (111) different from the corresponding original transport packets at modification positions and to generate complementary packets (112) comprising **original data and** modification positions generated relative to the first transport protocol of the said list;
- an updating step (213) to generate updated complementary packets (113) comprising modification positions relative to all transport protocols of the said list, **excepting the first one.**

2. The method in accordance with claim 1, wherein generating a second protected audiovisual stream (123) comprises:
- an analyz**ing** step (216) to generate a second list (132) of transport containing the difference between the set of transport protocols to which the second protected stream (123) is compliant with and the set of transport protocols addressed within the complementary stream (122);
- an updating step (213) to generate a second updated complementary packets (114) comprising modification positions relative to all transport protocols of the said second list.

3. The method in accordance with claim 1, wherein generating a protected audiovisual stream (121, 123) uses cryptographic algorithms.

4. The method in accordance with claim 1, wherein generating a protected audiovisual stream (121, 123) comprises the replacing of at least one part of the original transport packets with different data to generated modified transport packets (112) and storing the said replaced **original data** within complementary transport packets (111, 113, 114).

5. The method in accordance with claim 1, wherein the said complementary stream (122, 124) is constituted by a set of transport packets compatible with at least one of the said transport protocol.

6. The method in accordance with claim 1, wherein the said complementary stream is multiplexed within the said protected **audiovisual** stream.

7. The method in accordance with claim 1, wherein the transmission of the said complementary stream is protected by cryptographic means.

8. The method in accordance with claim 1, wherein at least one of the said transport protocols is compliant with one of the following specifications: IP, UDP, RTP or MPEG-2 TS.

9. A system comprising:
- means to generate a protected audiovisual stream (121, 123) from **an** original stream (1), the said protected audiovisual stream comprising a set of modified transport packets that are different from the corresponding original transport packets at modification positions;
- means to generate a complementary stream (122, 124) of any format comprising digital information suitable to allow reconstruction of the original audiovisual stream from the said protected **audiovisual** stream,
- means to reconstitute on a receiving device (12) the original audiovisual stream from the **protected audiovisual** stream as function of the said complementary stream
- the said complementary stream comprises the said modification positions **and original data** and
- the said modification positions are generated according to each transport protocol of the said transport protocols,
wherein the system is being characterized that:
- means (211) to generate a list (131) of transport containing all the transport protocols to which the said original stream is compliant with, **the list of transport protocols being organized such that the first transport protocol in the list is the one situated at lowest-level on the transport protocol stack;**
- means (212) to generate modified transport packets (111) different from the corresponding original transport packets at modification positions and to generate complementary packets (112) comprising modification positions and **original data** relative to the first transport protocol of the said list;
- means (213) to generate updated complementary packets (113) comprising modification positions relative to all transport protocols of the said list, **excepting the first one.**

10. The system in accordance with claim 9 comprising cryptographic means to generate the said protected audiovisual stream.

11. The system in accordance with claim 9 comprising means to replace at least one part of the original transport packets with different data to generated modified transport packets (112) and storing the said replaced **original data** within complementary transport packets (111, 113, 114).

12. The system in accordance with claim 9 comprising:
- means (216) to generate a second list (132) of transport containing the difference between the set of transport protocols to which the second protected stream (123) is compliant with and the set of transport protocols addressed within the complementary stream (122);
- means (213) to generate second updated complementary packets (114) comprising modification positions relative to all transport protocols of the said second list.

13. The system in accordance with claim 9 wherein the said receiving device is a computer, a set-top-box, a media center, a mobile phone, a PDA, a portable media player or any other hardware device with multimedia capabilities.

## Patentansprüche

1. Verfahren zur sicheren Verteilung eines audiovisuellen Stroms (1), der aus einem Satz von Transportpaketen besteht, die gemäß eine Vielzahl von Transportprotokollen eingekapselt werden und geeignet sind, zu einer Empfangsvorrichtung (12) übertragen zu werden, die mit einem der besagten Transportprotokolle kompatibel ist, wobei das Verfahren die folgenden Schritte umfasst:
- Erzeugung eines geschützten audiovisuellen Stroms (121,123) aus einem ursprünglichen Strom, wobei der geschützte audiovisuelle Strom einen Satz modifizierte Transportpakete umfasst, die an Modifizierungspositionen anders als die entsprechenden Originaltransportpakete sind;
- Erzeugung eines komplementären Stroms (122,124) beliebigen Formats mit digitalen Informationen zur Rekonstruierung des ursprünglichen audiovisuellen Stroms aus dem geschützten audiovisuellen Strom,
- Wiederherstellung, auf der besagten Empfangsvorrichtung, des ursprünglichen audiovisuellen Stroms aus dem geschützten audiovisuellen Strom als Funktion des besagten komplementären Stroms,
- der besagte komplementäre Strom umfasst die ursprünglichen Daten und besagte Modifizierungspositionen, und
- die besagten Modifizierungspositionen werden für jedes Transportprotokoll der besagten Transportprotokolle erzeugt.
wobei das Verfahren folgendes umfasst:
- eine Analysephase (211), um eine Liste (131) von Transportprotokollen zu erzeugen, die alle Transportprotokolle enthalten, mit denen der besagte ursprüngliche Strom kompatibel ist, wobei die Liste von Transportprotokollen so aufgebaut ist, dass das erste Transportprotokoll in der Liste das tiefstgelegene auf dem Transportprotokollstapel ist;
- eine Modifizierungsphase (212), um modifizierte Transportpakete (111) zu erzeugen, die an Modifizierungspositionen anders als die entsprechenden Originaltransportpakete sind, und um komplementäre Pakete (112) zu erzeugen, die Originaldaten und Modifizierungspositionen umfassen, die in bezug auf das erste Transportprotokoll der besagten Liste erzeugt wurden;
- eine Aktualisierungsphase (213), um aktualisierte komplementäre Pakete (113) mit Modifizierungspositionen in bezug auf alle Transportprotokolle der besagten Liste zu erzeugen, außer dem ersten.

2. Verfahren nach Anspruch 1, wobei die Erzeugung eines zweiten geschützten audiovisuellen Stroms (123) folgendes umfasst:
- eine Analysephase (216), um eine zweite Transportliste (132) zu erzeugen, die den Unterschied zwischen dem Satz von Transportprotokollen enthält, mit denen der zweite geschützte Strom (123) kompatibel ist, und dem Satz von Transportprotokollen, die innerhalb des komplementären Stroms (122) angesprochen werden;
- eine Aktualisierungsphase (213), um zweite aktualisierte komplementäre Pakete (114) mit Modifizierungspositionen in bezug auf alle Transportprotokolle der besagten zweiten Liste zu erzeugen.

3. Verfahren nach Anspruch 1, wobei die Erzeugung eines geschützten audiovisuellen Stroms (121,123) kryptographische Algorithmen verwendet.

4. Verfahren nach Anspruch 1, wobei die Erzeugung eines geschützten audiovisuellen Stroms (121,123) die Ersetzung von mindestens einem Teil der ursprünglichen Transportspakete durch andere Daten umfasst, um modifizierte Transportpakete (112) zu erzeugen, sowie das Speichern der besagten ersetzten Originaldaten in komplementären Transportspaketen (111, 113,114).

5. Verfahren nach Anspruch 1, wobei der besagte komplementäre Strom (122,124) aus einem Satz von Transportpaketen besteht, die mit mindestens einem des besagten Transportprotokolls kompatibel sind.

6. Verfahren nach Anspruch 1, wobei der besagte komplementäre Strom in dem geschützten audiovisuellen Strom gemultiplext wird.

7. Verfahren nach Anspruch 1, wobei die Übertragung des besagten komplementären Stroms durch kryptographische Mittel geschützt wird.

8. Verfahren nach Anspruch 1, wobei mindestens eines der besagten Transportprotokolle mit einer der folgenden Spezifikationen kompatibel ist: IP, UDP, RTP oder MPEG-2 TS.

9. Ein System mit:
- Mitteln, um einen geschützten audiovisuellen Strom (121,123) aus einem ursprünglichen Strom (1) zu erzeugen, wobei der besagte geschützte audiovisuelle Strom einen Satz von veränderten Transportpaketen umfasst, die an Modifizierungspositionen anders als die entsprechenden Originaltransportpakete sind;
- Mitteln, um einen komplementären Strom (122,124) beliebigen Formats mit digitalen Informationen zu erzeugen, zur Rekonstruierung des ursprünglichen audiovisuellen Stroms aus dem geschützten audiovisuellen Strom,
- Mitteln, um auf einer Empfangsvorrichtung (12) den ursprünglichen audiovisuellen Strom aus dem geschützten audiovisuellen Strom als Funktion des komplementären Stroms wiederherzustellen
- der komplementäre Strom umfasst die Modifizierungspositionen und Originaldaten, und
- die Modifizierungspositionen werden gemäß jedem Transportprotokoll der besagten Transportprotokolle erzeugt.
wobei das System durch folgendes gekennzeichnet ist:
- Mittel (211), um eine Transportliste (131) zu erzeugen, die alle Transportprotokolle enthält, mit denen der ursprüngliche Strom kompatibel ist, wobei die Liste von Transportprotokollen so aufgebaut ist, dass das erste Transportprotokoll in der Liste das tiefstgelegene auf dem Protokollstapel ist;
- Mittel (212), um veränderte Transportpakete (111) zu erzeugen, die an Modifizierungspositionen anders als die entsprechenden Originaltransportpakete sind, und um komplementäre Pakete (112) mit Modifizierungspositionen und Originaldaten in bezug auf das erste Transportprotokoll der besagten Liste zu erzeugen;
- Mittel (213), um aktualisierte komplementäre Pakete (113) mit Modifizierungspositionen in bezug auf alle Transportprotokolle der besagten Liste zu erzeugen, außer dem ersten.

10. System nach Anspruch 9 mit kryptographischen Mitteln, um den besagten geschützten audiovisuellen Strom zu erzeugen.

11. System nach Anspruch 9 mit Mitteln, um mindestens einen Teil der ursprünglichen Transportpakete durch andere Daten zu ersetzen, um modifizierte Transportpakete (112) zu erzeugen, und Speichern der besagten ersetzten Originaldaten in komplementären Transportpaketen (111, 113,114).

12. System nach Anspruch 9 mit:
- Mittel (216), um eine Transportliste (132) zu erzeugen, die den Unterschied zwischen dem Satz von Transportprotokollen enthält, mit denen der zweite geschützte Strom (123) kompatibel ist, und dem Satz von Transportprotokollen, die innerhalb des komplementären Stroms (122) angesprochen werden;
- Mittel (213), um zweite aktualisierte komplementäre Pakete (114) mit Modifizierungspositionen in bezug auf alle Transportprotokolle der besagten zweiten Liste zu erzeugen.

13. System nach Anspruch 10, wobei die besagte Empfangsvorrichtung ein Computer ist, eine Set-top-box, ein Medienzentrum, ein Mobiltelefon, ein PDA, ein tragbarer Mediaplayer oder jegliche andere Hardwarevorrichtung mit multimedialen Fähigkeiten.

## Revendications

1. Méthode de distribution sécurisée d'un flux audiovisuel original (1) constitué d'un ensemble de paquets de transport encapsulés selon une pluralité de protocoles de transport aptes à être transmis à un dispositif de réception (12) compatible avec un desdits protocoles de transport, la méthode comprenant les étapes suivantes :
- génération d'un flux audiovisuel protégé (121, 123) à partir d'un flux original, ledit flux audiovisuel protégé comprenant un ensemble de paquets de transport modifiés qui sont différents des paquets de transport originaux correspondants à des positions de modification,
- génération d'un flux complémentaire (122, 124) d'un format quelconque comprenant des informations numériques aptes à permettre une reconstruction du flux audiovisuel original à partir dudit flux audiovisuel protégé,
- reconstitution sur ledit dispositif de réception dudit flux audiovisuel original à partir dudit flux audiovisuel protégé comme fonction dudit flux complémentaire,
- ledit flux complémentaire comprend les données originales et lesdites positions de modification et
- lesdites positions de modification sont générées pour chaque protocole de transport desdits protocoles de transport,
dans laquelle la méthode comprend :
- une étape d'analyse (211) pour générer une liste (131) de protocoles de transport contenant tous les protocoles de transport auxquels ledit flux original est conforme, la liste de protocoles de transport étant organisée de sorte que le premier protocole de transport de la liste soit celui situé au niveau le plus bas sur la pile du protocole de transport ;
- une étape de modification (212) pour générer des paquets de transport modifiés (111) différents des paquets de transport originaux correspondants à des positions de modification et pour générer des paquets complémentaires (112) comprenant des données originales et des positions de modification générées en relation avec le premier protocole de transport de ladite liste ;
une étape de mise à jour (213) pour générer des paquets complémentaires mis à jour (113) comprenant des positions de modification relatives à tous les protocoles de transport de ladite liste, excepté le premier.

2. Méthode selon la revendication 1, dans laquelle la génération d'un second flux audiovisuel protégé (123) comprend :
- une étape d'analyse (216) pour générer une seconde liste de transport (132) contenant la différence entre l'ensemble des protocoles de transport auquel le second flux protégé (123) est conforme et l'ensemble des protocoles de transport adressé dans le flux complémentaire (122),
- une étape de mise à jour (213) pour générer des seconds paquets complémentaires mis à jour (114) comprenant des positions de modification relatives à tous les protocoles de transport de ladite seconde liste.

3. Méthode selon la revendication 1, dans laquelle la génération d'un flux audiovisuel protégé (121, 123) utilise des algorithmes cryptographiques.

4. Méthode selon la revendication 1, dans laquelle la génération d'un flux audiovisuel protégé (121, 123) comprend le remplacement d'au moins une partie des paquets de transport originaux avec des données différentes pour générer des paquets de transport modifiés (112) et stocker lesdites données originales remplacées dans des paquets de transport complémentaires (111, 113, 114).

5. Méthode selon la revendication 1, dans laquelle ledit flux complémentaire (122, 124) est constitué d'un ensemble de paquets de transport compatible avec au moins un desdits protocole de transport.

6. Méthode selon la revendication 1, dans laquelle ledit flux complémentaire est multiplexé dans ledit flux audiovisuel protégé.

7. Méthode selon la revendication 1, dans laquelle la transmission dudit flux complémentaire est protégée par des moyens cryptographiques.

8. Méthode selon la revendication 1, dans laquelle au moins un desdits protocoles de transport est conforme à l'une des spécifications suivantes : IP, UDP, RTP ou MPEG-2 TS.

9. Système comprenant :
- des moyens de génération d'un flux audiovisuel protégé (121, 123) à partir d'un flux original (1), ledit flux audiovisuel protégé comprenant un ensemble de paquets de transport modifiés qui sont différents des paquets de transport originaux correspondants à des positions de modification,
- des moyens de génération d'un flux complémentaire (122, 124) d'un format quelconque comprenant des informations numériques aptes à permettre une reconstruction du flux audiovisuel original à partir dudit flux audiovisuel protégé,
- des moyens de reconstitution sur un dispositif de réception (12) du flux audiovisuel original à partir du flux audiovisuel protégé comme fonction dudit flux complémentaire,
- ledit flux complémentaire comprend lesdites positions de modification et les données originales et
- lesdites positions de modification sont générées selon chaque protocole de transport desdits protocoles de transport,
dans lequel le système étant **caractérisé en ce que**:
- des moyens (211) de génération d'une liste (131) de transport contenant tous les protocoles de transport auxquels ledit flux original est conforme, la liste de protocoles de transport étant organisée de sorte que le premier protocole de transport de la liste soit celui situé au niveau le plus bas sur la pile du protocole de transport ;
- des moyens (212) de génération de paquets de transport modifiés (111) différents des paquets de transport originaux correspondants à des positions de modification et de génération de paquets complémentaires (112) comprenant des positions de modification et des données originales en relation avec le premier protocole de transport de ladite liste ;
- des moyens (213) de génération de paquets complémentaires mis à jour (113) comprenant des positions de modification relatives à tous les protocoles de transport de ladite liste, excepté le premier.

10. Système selon la revendication 9, comprenant des moyens cryptographiques de génération dudit flux audiovisuel protégé.

11. Système selon la revendication 9, comprenant des moyens de remplacement d'au moins une partie des paquets de transport originaux avec des données différentes pour générer des paquets de transport modifiés (112) et stocker lesdites données originales remplacées dans des paquets de transport complémentaires (111, 113, 114).

12. Système selon la revendication 9, comprenant :
- des moyens (216) de génération d'une seconde liste de transport (132) contenant la différence entre l'ensemble des protocoles de transport auquel le second flux protégé (123) est conforme et l'ensemble des protocoles de transport adressé dans le flux complémentaire (122),
- des moyens (213) de génération de seconds paquets complémentaires mis à jour (114) comprenant des positions de modification relatives à tous les protocoles de transport de ladite seconde liste.

13. Système selon la revendication 9 dans lequel ledit dispositif de réception est un ordinateur, un décodeur, un centre de média, un téléphone mobile, un PDA, un lecteur portable de média, ou tout autre dispositif matériel avec des fonctions multimédia.
